# EUROPÄISCHE PATENTSCHRIFT

(11) **EP 3 694 672 B1**
(45) Veröffentlichungstag und Bekanntmachung des Hinweises auf die Patenterteilung: **04.12.2024**
(21) Anmeldenummer: 18782070.9
(22) Anmeldetag: 05.10.2018
(51) Int. Cl.: B23K 9/16, B23K 9/20, B23K 11/00, B23K 9/095

(54) **SCHWEISSVORRICHTUNG UND -VERFAHREN**
WELDING DEVICE AND METHOD
DISPOSITIF DE SOUDAGE ET PROCÉDÉ DE SOUDAGE

(30) Priorität: 10.10.2017 EP 17195603
(43) Veröffentlichungstag der Anmeldung: 19.08.2020
(73) Patentinhaber: Hilti Aktiengesellschaft, 9494 Schaan (LI)
(72) Erfinder: POPP, Uwe, 9443 Widnau (CH)
(74) Vertreter: Hilti Aktiengesellschaft Corporate Intellectual Property
(86) Internationale Anmeldenummer: PCT/EP2018/077105
(87) Internationale Veröffentlichungsnummer: WO 2019/072705

(56) Entgegenhaltungen:
- US-A- 2 491 479
- US-A- 3 790 740
- US-A- 4 201 904
- US-A1- 2008 223 830

## Beschreibung

### Technisches Gebiet

Die Erfindung betrifft allgemein eine Vorrichtung und ein Verfahren zur Befestigung eines Bolzens an einem Untergrund (vergleiche z.B. US 2 491 479 A).

### Stand der Technik

Es sind etliche Vorrichtungen und Verfahren bekannt, mit denen verschiedene Bolzen in unterschiedlichen Anwendungsfällen an einem Untergrund befestigt werden. Beispielsweise wird ein Bolzen mit dem Untergrund in Kontakt gebracht und mit elektrischem Strom beaufschlagt. Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der elektrische Strom abgeschaltet und der Bolzen in das verflüssigte Material eingetaucht, während dieses Material erkaltet und fest wird. Der Bolzen ist dann stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist es bekannt, die Kontaktstelle zwischen dem Bolzen und dem Untergrund mit einem Inertgas zu spülen.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen. Einige Parameter des Befestigungsverfahrens wie beispielsweise die Dauer und die elektrische Leistung des elektrischen Stroms sind von einem Anwender an der Vorrichtung einzustellen und an den verwendeten Bolzen anzupassen. Mittels einer Sichtprüfung beurteilt der Anwender schliesslich die Qualität der Verbindung zwischen dem Bolzen und dem Untergrund. Die Verbindungsqualität hängt damit auch von der Erfahrung und den Fähigkeiten des Anwenders ab.

### Darstellung der Erfindung

Aufgabe der Erfindung ist es, eine Vorrichtung und/oder ein Verfahren zur Verfügung zu stellen, mit welchem eine Befestigung eines Bolzens an einem Untergrund vereinfacht und/oder verbessert wird.

Diese Aufgabe ist gelöst bei einer Vorrichtung zum Schweissen von Schweissbolzen an einen Untergrund, mit einer Schweisspistole, welche einen Bolzenhalter für jeweils einen Schweissbolzen umfasst, mit einem Schweissgerät, mit einem Gasbehälter, mit einer Gasleitung zur Leitung von Gas aus dem Gasbehälter zu dem Bolzenhalter, mit einem in der Gasleitung angeordneten Ventil, und mit einer Steuereinrichtung für eine Steuerung des Ventils, welche dafür vorgesehen ist, das Ventil während eines vorbestimmten Zeitraums vor dem Beginn eines Schweissvorgangs zu öffnen, um die Gasleitung mit Gas aus dem Gasbehälter automatisch zu spülen, wenn die Vorrichtung eingeschaltet wird und/oder nach einer Stillstandszeit der Vorrichtung.

Durch die automatisierte Spülung der Gasleitung wird unter Umständen die Wartezeit vor einem Schweissvorgang und/oder der Gasverbrauch reduziert.

Eine vorteilhafte Ausführungsform ist dadurch gekennzeichnet, dass die Steuereinrichtung dafür vorgesehen ist, einen Schweissvorgang einzuleiten, wenn der vorbestimmte Zeitraum verstrichen ist. Eine alternative Ausführungsform ist dadurch gekennzeichnet, dass die Steuereinrichtung dafür vorgesehen ist, einem Benutzer der Vorrichtung die Bereitschaft der Vorrichtung für einen Schweissvorgang zu signalisieren, wenn der vorbestimmte Zeitraum verstrichen ist.

Eine weitere vorteilhafte Ausführungsform ist dadurch gekennzeichnet, dass der Gasbehälter von dem Schweissgerät, der Gasleitung und/oder der Schweisspistole getragen ist.

Eine weitere vorteilhafte Ausführungsform ist dadurch gekennzeichnet, dass die Vorrichtung eine Gasdurchfluss-Regeleinrichtung für eine Regelung eines Gasdurchflusses durch die Gasleitung umfasst, wobei die Gasdurchfluss-Regeleinrichtung das Ventil umfasst.

Eine weitere vorteilhafte Ausführungsform ist dadurch gekennzeichnet, dass die Vorrichtung ein erstes elektrisches Kabel zur Leitung von Schweissstrom von dem Schweissgerät zu der Schweisspistole und ein zweites elektrisches Kabel zur Leitung des Schweissstroms von dem Untergrund zu dem Schweissgerät umfasst.

Die Aufgabe ist ebenfalls gelöst bei einem Verfahren zum Schweissen eines Schweissbolzens an einen Untergrund, bei dem eine Vorrichtung mit einer Schweisspistole, welche einen Bolzenhalter für den Schweissbolzen umfasst, mit einem Schweissgerät, mit einem Gasbehälter, mit einer Gasleitung zur Leitung von Gas aus dem Gasbehälter zu dem Bolzenhalter, und mit einem in der Gasleitung angeordneten Ventil, zur Verfügung gestellt wird, wobei das Ventil während eines vorbestimmten Zeitraums geöffnet wird, um die Gasleitung mit Gas aus dem Gasbehälter zu spülen, und der Schweissbolzen an den Untergrund geschweisst wird, während der Schweissbolzen von Gas aus dem Gasbehälter umströmt wird.

Eine vorteilhafte Ausführungsform ist dadurch gekennzeichnet, dass das Schweissen des Schweissbolzens an den Untergrund eingeleitet wird, wenn der vorbestimmte Zeitraum verstrichen ist. Eine alternative Ausführungsform ist dadurch gekennzeichnet, dass einem Benutzer der Vorrichtung die Bereitschaft der Vorrichtung für einen Schweissvorgang signalisiert wird, wenn der vorbestimmte Zeitraum verstrichen ist.

### Ausführungsbeispiele

Die Erfindung wird nachstehend anhand von Ausführungsbeispielen unter Bezugnahme auf die Zeichnungen näher erläutert. Es zeigt:

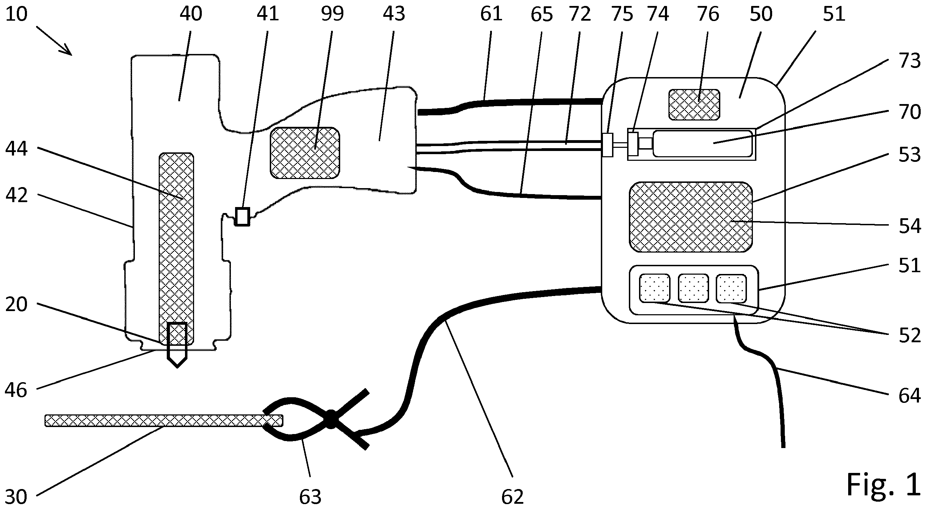

- Fig. 1: schematisch eine Schweissvorrichtung.

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50 mit einem Gehäuse 51, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, einen als Gasdose oder Gasflasche ausgebildeten Gasbehälter 70 und eine als Gasschlauch ausgebildete Gasleitung 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer in Fig. 1 nicht gezeigten Steuereinrichtung der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

Die Schweisspistole 40 weist ein Gehäuse 42 mit einer Mündung 46 auf, von welchem ein Handgriff 43 mit dem Auslöseschalter 41 abragt. Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner eine Steuereinrichtung 99 zum Steuern der verschiedenen Komponenten und Einrichtungen der Schweisspistole und des Schweissgeräts 50 auf. Die Steuereinrichtung 99 ist zum Steuern eines oder mehrerer Parameter des Schweissvorgangs vorgesehen. Die Steuereinrichtung 99 umfasst dazu verschiedene elektronische Bauteile, wie beispielsweise einen oder mehrere Mikroprozessoren, einen oder mehrere temporäre oder dauerhafte Datenspeicher und dergleichen, auf.

Die Schweisspistole 40 weist ferner eine als ein erster Hubmagnet ausgebildete Bolzenabhubeinrichtung auf, welche den Bolzenhalter 44 mit einer Kraft von der Mündung 46 weg nach hinten (in Fig. 1 nach oben) beaufschlagt, wenn die Bolzenabhubeinrichtung aktiviert ist. Über eine nicht gezeigte Signalleitung kommuniziert die Steuereinrichtung 99 mit der Bolzenabhubeinrichtung, um die Bolzenabhubeinrichtung zu steuern, insbesondere zu aktivieren und zu deaktivieren.

Die Schweisspistole 40 weist ferner eine als Federelement oder als ein zweiter Hubmagnet ausgebildete Bolzeneintaucheinrichtung auf, welche den Bolzenhalter 44 mit einer Kraft zu der Mündung 46 hin nach vorne (in Fig. 1 nach unten) beaufschlagt, wenn die Bolzeneintaucheinrichtung aktiviert ist. Über eine nicht gezeigte Signalleitung kommuniziert die Steuereinrichtung 99 mit der Bolzeneintaucheinrichtung, um die Bolzeneintaucheinrichtung zu steuern, insbesondere zu aktivieren und zu deaktivieren. Wenn die Bolzeneintaucheinrichtung als ein Federelement ausgebildet ist, wird dieses Federelement vorzugsweise gespannt, wenn der Bolzenhalter von der Bolzenabhubeinrichtung nach hinten bewegt wird, so dass das Federelement den Bolzenhalter nach vorne bewegt, sobald die Bolzenabhubeinrichtung deaktiviert wird.

Die Gasleitung 72 dient einer Versorgung eines Kontaktbereichs zwischen dem Schweissbolzen 20 und dem Untergrund 30 mit einem Schutzgas aus dem Gasbehälter 70, um den Kontaktbereich während eines Schweissvorgangs vor einer Oxidation durch Sauerstoff einer Umgebung zu schützen. Die Gasleitung 72 leitet das Schutzgas zu dem Bolzenhalter 44.

Das Schweissgerät 50 weist eine in dem Gehäuse 51 angeordnete Gasbehälteraufnahme 73 auf, in welcher der Gasbehälter 70 austauschbar aufgenommen ist, so dass der Gasbehälter 70 von dem Schweissgerät 50 getragen ist. Bei einem nicht gezeigten Ausführungsbeispiel ist der Gasbehälter aussen am Schweissgerät, beispielsweise an dessen Gehäuse, angebracht, insbesondere befestigt. Die Gasleitung 72 weist ein Gasanschlusselement 74 auf, welches für einen Anschluss des Gasbehälters 70 an die Gasleitung 72 an der Gasbehälteraufnahme 73 angeordnet ist. Weiterhin weist die Schweissvorrichtung 10 und insbesondere das Schweissgerät 50 eine als Ventil, insbesondere Magnetventil, ausgebildete Gasdurchfluss-Regeleinrichtung 75 für eine Regelung eines Gasdurchflusses durch die Gasleitung 72 auf, wobei der Gasdurchfluss beispielsweise dadurch geregelt wird, dass eine Querschnittsfläche der Gasdurchfluss-Regeleinrichtung 75 eingestellt wird, oder dass eine zeitliche Dauer oder Frequenz einer oder mehrerer geöffneter Phasen der Gasdurchfluss-Regeleinrichtung 75 eingestellt wird. Die Regelung des Gasdurchflusses ist dabei vorzugsweise auf die übrigen Parameter des Schweissvorgangs und/oder das Gasvolumen in der Gasleitung 72 abgestimmt.

Die Gasdurchfluss-Regeleinrichtung 75 ist vollständig in dem Gehäuse 51 angeordnet und von dem Schweissgerät 50 getragen und dient einer Steuerung eines Gasflusses zu dem Kontaktbereich zwischen dem Schweissbolzen 20 und dem Untergrund 30. Die Gasdurchfluss-Regeleinrichtung 75 umfasst ein regelbares Ventil, welches beispielsweise von der Steuerungseinrichtung 99 geregelt wird. Unter anderem ist die Steuerungseinrichtung 99 dafür vorgesehen, das Ventil während eines vorbestimmten Zeitraums zu öffnen, um die Gasleitung 72 mit Gas aus dem Gasbehälter zu spülen, und einen Schweissvorgang einzuleiten oder einem Benutzer der Schweissvorrichtung 10 die Bereitschaft der Schweissvorrichtung 10 für einen Schweissvorgang zu signalisieren, wenn der vorbestimmte Zeitraum verstrichen ist. Durch die automatisierte Spülung der Gasleitung 72 wird unter Umständen die Wartezeit vor einem Schweissvorgang und/oder der Gasverbrauch reduziert. Weiterhin weist die Schweissvorrichtung 10 und insbesondere das Schweissgerät 50 eine Füllstands-Detektionseinrichtung 76 für den Gasbehälter 70 auf. Die Füllstands-Detektionseinrichtung 76 ist vorzugsweise vollständig in dem Gehäuse 51 angeordnet und von dem Schweissgerät 50 getragen. Die Füllstands-Detektionseinrichtung 76 umfasst einen in der Gasleitung 72, beispielsweise an dem Gasanschlusselement 74 angeordneten Drucksensor zur Messung des Innendrucks des Gasbehälters sowie eine Datenverarbeitungseinrichtung, welche die Anzahl von erfolgten Schweissungen detektiert. Bei nicht gezeigten Ausführungsbeispielen umfasst die Füllstands-Detektionseinrichtung einen Sensor insbesondere zur Messung des Gewichts oder der Trägheit des Gasbehälters, des Druck- oder Temperaturgefälles während einer Regelung des Gasflusses, einer akustischen Antwort des Gasbehälterinhalts oder dergleichen. Zusätzlich oder alternativ umfasst die Füllstands-Detektionseinrichtung 76 ein Speichermedium, welches an dem Gasbehälter 70 angebracht ist, und eine Datenverarbeitungseinrichtung, welche von dem Schweissgerät getragen und dafür geeignet ist, Informationen über einen Füllstand des Gasbehälters 70 auf dem Speichermedium abzuspeichern und/oder von dem Speicher auszulesen und/oder mittels der Ausgabeeinrichtung 53, beispielsweise deren Anzeigeelement 54, auszugeben.

Bei einem Schweissverfahren mit der Schweissvorrichtung 10 werden zunächst der Untergrund 30 und der Bolzen 20 zur Verfügung gestellt. In einem weiteren Schritt werden von einem Anwender über die Eingabeeinrichtung Informationen eingegeben, beispielsweise über gewünschte Parameter des folgenden Schweissvorgangs. In einem weiteren Schritt wird der Schweissbolzen 20 von dem Schweissgerät 50 mittels des ersten Kabels 61 und des zweiten Kabels 62 mit einem Schweissstrom zwischen dem Schweissbolzen 20 und dem Untergrund 30 beaufschlagt. In einem weiteren Schritt wird der Schweissbolzen 20 mittels der Bolzenabhubeinrichtung von dem Untergrund unter Beibehaltung des zwischen dem Schweissbolzen 20 und dem Untergrund 30 fliessenden Schweissstroms abgehoben, wobei sich zwischen dem Schweissbolzen 20 und dem Untergrund 30 ein Lichtbogen ausbildet. Insbesondere aufgrund der von dem Lichtbogen erzeugten Hitze wird dann ein Material des Schweissbolzens 20 und/oder des Untergrunds 30 teilweise verflüssigt. In einem weiteren Schritt wird der Schweissbolzen 20 mittels der Bolzeneintaucheinrichtung in das verflüssigte Material des Schweissbolzens 20 beziehungsweise des Untergrunds 30 eingetaucht. Danach erstarrt das verflüssigte Material des Schweissbolzens 20 beziehungsweise des Untergrunds 30, so dass der Schweissbolzen 20 stoffschlüssig mit dem Untergrund 30 verbunden ist.

Um die Gasleitung 72 mit Gas aus dem Gasbehälter 70 zu spülen, wird das Ventil der Gasdurchfluss-Regeleinrichtung 75 während eines vorbestimmten Zeitraums geöffnet, und der Schweissbolzen 20 an den Untergrund 30 geschweisst, während der Schweissbolzen 20 von Gas aus dem Gasbehälter 70 umströmt wird. Das Schweissen des Schweissbolzens 20 an den Untergrund 30 wird dabei eingeleitet, wenn der vorbestimmte Zeitraum verstrichen ist. Alternativ wird einem Benutzer der Schweissvorrichtung 10 die Bereitschaft der Vorrichtung für einen Schweissvorgang signalisiert, wenn der vorbestimmte Zeitraum verstrichen ist. Diese automatische Spülung der Gasleitung wird vorzugsweise immer dann, insbesondere nur dann, durchgeführt, wenn die Schweissvorrichtung 10 eingeschaltet wird und/oder nach längerer Stillstandszeit und/oder nach einem Auswechseln von Teilen der Gasleitung 72.

Die einzelnen Verfahrensschritte werden dabei von der Steuerungseinrichtung 99 gesteuert, welche insbesondere auch die Parameter des Schweissvorgangs, wie beispielsweise eine elektrische Spannung, eine Stromstärke und eine Dauer des Schweissstroms, oder ein Zeitpunkt und eine Geschwindigkeit der Bolzenbewegung, oder eine Bolzenposition, oder einen Gasdurchfluss durch die Gasleitung 72, regelt. Weiterhin wird ein Füllstand des Gasbehälters 70 und die Anzahl von erfolgten Schweissungen detektiert, gespeichert und ausgegeben.

Die Erfindung wurde anhand von Beispielen einer Vorrichtung zur Befestigung eines ersten Gegenstandes an einem zweiten Gegenstand sowie einem Herstellungsverfahren für eine solche Vorrichtung beschrieben. Die Merkmale der beschriebenen Ausführungsformen sind dabei auch beliebig miteinander innerhalb einer einzigen Befestigungsvorrichtung beziehungsweise eines einzigen Herstellungsverfahrens kombinierbar. Es wird darauf hingewiesen, dass die erfindungsgemässe Vorrichtung und das erfindungsgemässe Verfahren auch für andere Zwecke geeignet sind.

## Patentansprüche

1. Vorrichtung (10) zum Schweissen von Schweissbolzen (20) an einen Untergrund (30), mit einer Schweisspistole (40), welche einen Bolzenhalter (44) für jeweils einen Schweissbolzen (20) umfasst, mit einem Schweissgerät (50), mit einem Gasbehälter (70), mit einer Gasleitung (72) zur Leitung von Gas aus dem Gasbehälter (70) zu dem Bolzenhalter (44), mit einem in der Gasleitung (72) angeordneten Ventil, und mit einer Steuereinrichtung (99) für eine Steuerung des Ventils, **dadurch gekennzeichnet, dass** die Steuereinrichtung (99) dafür vorgesehen ist, das Ventil nur dann während eines vorbestimmten Zeitraums vor Beginn eines Schweissvorgangs zu öffnen, um die Gasleitung (72) mit Gas aus dem Gasbehälter (70) automatisch zu spülen, wenn die Vorrichtung (10) eingeschaltet wird und/oder nach einer Stillstandszeit der Vorrichtung (10).

2. Vorrichtung nach Anspruch 1, wobei die Steuereinrichtung (99) dafür vorgesehen ist, einen Schweissvorgang einzuleiten, wenn der vorbestimmte Zeitraum verstrichen ist.

3. Vorrichtung nach Anspruch 1, wobei die Steuereinrichtung (99) dafür vorgesehen ist, einem Benutzer der Vorrichtung (10) die Bereitschaft der Vorrichtung (10) für einen Schweissvorgang zu signalisieren, wenn der vorbestimmte Zeitraum verstrichen ist.

4. Vorrichtung nach einem der vorhergehenden Ansprüche, wobei der Gasbehälter (70) von dem Schweissgerät (50), der Gasleitung (72) und/oder der Schweisspistole (40) getragen ist.

5. Vorrichtung nach einem der vorhergehenden Ansprüche, weiterhin aufweisend eine Gasdurchfluss-Regeleinrichtung (75) für eine Regelung eines Gasdurchflusses durch die Gasleitung (72), wobei die Gasdurchfluss-Regeleinrichtung (75) das Ventil umfasst.

6. Vorrichtung nach einem der vorhergehenden Ansprüche, weiterhin aufweisend ein erstes elektrisches Kabel (61) zur Leitung von Schweissstrom von dem Schweissgerät (50) zu der Schweisspistole (40) und ein zweites elektrisches Kabel (62) zur Leitung des Schweissstroms von dem Untergrund (30) zu dem Schweissgerät.

7. Verfahren zum Schweissen von Schweissbolzen (20) an einen Untergrund (30), mit den Schritten
a) Zur-Verfügung-Stellen einer Vorrichtung (10) mit einer Schweisspistole (40), welche einen Bolzenhalter (44) für jeweils einen Schweissbolzen (20) umfasst, mit einem Schweissgerät, mit einem Gasbehälter (70), mit einer Gasleitung (72) zur Leitung von Gas aus dem Gasbehälter (70) zu dem Bolzenhalter, und mit einem in der Gasleitung (72) angeordneten Ventil,
b) Öffnen des Ventils während eines vorbestimmten Zeitraums, um die Gasleitung (72) mit Gas aus dem Gasbehälter (70) automatisch zu spülen und
c) Schweissen des jeweiligen Schweissbolzens (20) an den Untergrund (30), während der jeweilige Schweissbolzen (20) von Gas aus dem Gasbehälter (70) umströmt wird,
**dadurch gekennzeichnet, dass**
in Schritt b) das Ventil nur dann während des vorbestimmten Zeitraums vor Beginn des Schweissvorgangs geöffnet wird, wenn die Vorrichtung (10) eingeschaltet wird und/oder nach einer Stillstandszeit der Vorrichtung (10) und/oder nach einem Auswechseln von Teilen der Gasleitung (72).

8. Verfahren nach Anspruch 7, bei dem Schritt c) eingeleitet wird, wenn der vorbestimmte Zeitraum verstrichen ist.

9. Verfahren nach Anspruch 7, bei dem einem Benutzer der Vorrichtung (10) die Bereitschaft der Vorrichtung (10) für einen Schweissvorgang signalisiert wird, wenn der vorbestimmte Zeitraum verstrichen ist.

## Claims

1. Device (10) for welding welding studs (20) to a substrate (30), with a welding gun (40), which comprises a stud holder (44) for a respective welding stud (20), with a welding unit (50), with a gas container (70), with a gas line (72) for conducting gas from the gas container (70) to the stud holder (44), with a valve arranged in the gas line (72), and with a control device (99) for controlling the valve, **characterized in that** the control device (99) is intended to open the valve only for a predetermined period of time before the start of a welding operation in order to automatically flush the gas line (72) with gas from the gas container (70) when the device (10) is switched on and/or after a downtime of the device (10).

2. Device according to Claim 1, wherein the control device (99) is intended to initiate a welding operation when the predetermined period of time has elapsed.

3. Device according to Claim 1, wherein the control device (99) is intended to signal to a user of the device (10) that the device (10) is ready for a welding operation when the predetermined period of time has elapsed.

4. Device according to one of the preceding claims, wherein the gas container (70) is carried by the welding unit (50), the gas line (72) and/or the welding gun (40).

5. Device according to one of the preceding claims, further comprising a gas flow control device (75) for controlling a gas flow through the gas line (72), the gas flow control device (75) comprising the valve.

6. Device according to one of the preceding claims, further comprising a first electrical cable (61) for conducting welding current from the welding unit (50) to the welding gun (40) and a second electrical cable (62) for conducting the welding current from the substrate (30) to the welding unit.

7. Method for welding welding studs (20) to a substrate (30), with the steps of
a) providing a device (10) with a welding gun (40), which comprises a stud holder (44) for a respective welding stud (20), with a welding unit, with a gas container (70), with a gas line (72) for conducting gas from the gas container (70) to the stud holder, and with a valve arranged in the gas line (72),
b) opening the valve for a predetermined period of time to automatically flush the gas line (72) with gas from the gas container (70) and
c) welding the respective welding stud (20) to the substrate (30) while gas from the gas container (70) is flowing around the respective welding stud (20),
**characterized in that**
in step b) the valve is opened only for the predetermined period of time before the start of the welding operation when the device (10) is switched on and/or after a downtime of the device (10) and/or after parts of the gas line (72) have been exchanged.

8. Method according to Claim 7, in which step c) is initiated when the predetermined period of time has elapsed.

9. Method according to Claim 7, in which a user of the device (10) is signaled that the device (10) is ready for a welding operation when the predetermined period of time has elapsed.

## Revendications

1. Dispositif (10) permettant de souder des goujons à souder (20) sur un support (30), à l'aide d'un pistolet à souder (40) qui comprend un porte-goujon (44) pour respectivement un goujon à souder (20), comprenant un poste de soudure (50), un réservoir de gaz (70), une conduite de gaz (72) pour acheminer le gaz du réservoir de gaz (70) au porte-goujon (44), une vanne disposée dans la conduite de gaz (72), et un dispositif de commande (99) pour commander la vanne,
**caractérisé en ce que** le dispositif de commande (99) est prévu pour ouvrir la vanne pendant une période prédéterminée avant le début d'un processus de soudage pour rincer automatiquement la conduite de gaz (72) avec le gaz provenant du réservoir de gaz (70) uniquement lorsque le dispositif (10) est mis en service et/ou après un temps d'arrêt du dispositif (10).

2. Dispositif selon la revendication 1, dans lequel le dispositif de commande (99) est prévu pour lancer un processus de soudage lorsque la période prédéterminée s'est écoulée.

3. Dispositif selon la revendication 1, dans lequel le dispositif de commande (99) est prévu pour signaler à un utilisateur du dispositif (10) la disponibilité du dispositif (10) pour un processus de soudage lorsque la période prédéterminée s'est écoulée.

4. Dispositif selon l'une quelconque des revendications précédentes, dans lequel le réservoir de gaz (70) est porté par le poste de soudure (50), la conduite de gaz (72) et/ou le pistolet à souder (40).

5. Dispositif selon l'une quelconque des revendications précédentes, présentant en outre un dispositif de régulation de débit de gaz (75) pour réguler un débit de gaz à travers la conduite de gaz (72), le dispositif de régulation de débit de gaz (75) comprenant une vanne.

6. Dispositif selon l'une quelconque des revendications précédentes, présentant en outre un premier câble électrique (61) pour conduire un courant de soudage du poste de soudure (50) au pistolet à souder (40) et un deuxième câble électrique (62) pour conduire le courant de soudage du support (30) au poste de soudure.

7. Procédé permettant de souder des goujons à souder (20) sur un support (30), comprenant les étapes consistant à
a) fournir un dispositif (10) comprenant un pistolet à souder (40) qui comprend un porte-goujon (44) pour respectivement un goujon à souder (20), un poste de soudure, un réservoir de gaz (70), une conduite de gaz (72) pour conduire du gaz du réservoir de gaz (70) au porte-goujon, et une vanne disposée dans la conduite de gaz (72),
b) ouvrir la vanne pendant une période prédéterminée pour rincer automatiquement la conduite de gaz (72) avec le gaz provenant du réservoir de gaz (70), et
c) souder le goujon à souder (20) respectif sur le support (30) pendant que le goujon à souder (20) est entouré de gaz provenant du réservoir de gaz (70),
**caractérisé en ce qu'**à l'étape b), la vanne est ouverte pendant la période prédéterminée avant le début du processus de soudage uniquement lorsque le dispositif (10) est mis en service et/ou après un temps d'arrêt du dispositif (10) et/ou après un remplacement de pièces de la conduite de gaz (72).

8. Procédé selon la revendication 7, dans lequel l'étape c) est lancée lorsque la période de temps s'est écoulée.

9. Procédé selon la revendication 7, dans lequel la disponibilité du dispositif (10) pour un processus de soudage est signalée à un utilisateur du dispositif (10) lorsque la période prédéterminée s'est écoulée.
